# EUROPÄISCHE PATENTSCHRIFT

(11) **EP 0 495 814 B1**
(45) Veröffentlichungstag und Bekanntmachung des Hinweises auf die Patenterteilung: **20.04.1994**
(21) Anmeldenummer: 90914704.3
(22) Anmeldetag: 06.10.1990
(51) Int. Cl.: C10B 53/00

(54) **VERFAHREN ZUR ENTSORGUNG VON ABFALLSTOFFEN**
WASTE DISPOSAL PROCESS
PROCEDE POUR L'ELIMINATION DE DECHETS

(30) Priorität: 10.10.1989 DE 3933809
(43) Veröffentlichungstag der Anmeldung: 29.07.1992
(73) Patentinhaber: PKA PYROLYSE KRAFTANLAGEN GMBH, 73431 Aalen (DE)
(72) Erfinder: WOLF, Bernd, Michael, D-7080 Aalen (DE)
(74) Vertreter: Lorenz, Werner, Dipl.-Ing.
(86) Internationale Anmeldenummer: EP9001682
(87) Internationale Veröffentlichungsnummer: WO9105834

(56) Entgegenhaltungen:
- EP-A- 0 007 620
- WO-A-88/02284
- DE-A- 3 635 068
- DE-A- 3 727 004
- FR-A- 2 452 329

## Beschreibung

Die Erfindung betrifft ein Verfahren zur Entsorgung von toxischen und/oder infektiösen Abfallstoffen nach dem Oberbegriff von Anspruch 1. Weiterhin betrifft die Erfindung eine Anlage zur Durchführung des Verfahrens.

Verfahren zum Entsorgen von Haushalts- und/oder Industriemüll nach dem Pyrolyseverfahren mit einer Entgasungstrommel sind z.B. bereits aus der DE-OS 33 47 554, DE-OS 35 29 445 und DE-OS 37 27 004 bekannt.

Damit lassen sich jedoch nur Abfallstoffe entsorgen und wieder aufbereiten, bzw. zur Gewinnung von Brennstoffen verarbeiten, die nur in geringem Mengen umweltschädliche oder gesundheitsgefährdende Stoffe beinhalten.

Insbesondere betrifft dies hochhalogenierte Festkörper und Behältnisse für Krankenhausmaterialien mit toxischen und/oder infektiösen Inhaltsstoffen, für verschiedene Kunststoffe, wie z.B. PVC oder Kunststoffe, die hochchlorierte oder hochbromierte Zusätze enthalten, wie z.B. Flammschutzmittel (Dekabrombiphenyläther und ähnliches. Würde man diese Abfallstoffe in einem Pyrolyseverfahren mit den dabei vorherrschenden hohen Temperaturen verarbeiten, würde der hohe Chloranteil in dem abei entstehenden Schwelgas zu Problemen führen. Auch würden in größeren Mengen z.B. hochtoxische Dioxine und Furane mit mehr als 3 Chlor-Atom-Anbindungen im Schwelgas enthalten sein, deren vollständige Zerstörung im weiteren Verarbeitungsprozeß schwierig wäre. Zusätzlich würde sich das Störfallrisiko erhöhen.Hinzu kommt, daß bereits beim Zerkleinern und Granulieren von derartigen Abfallstoffen giftige Gase frei werden, wie z.B. Fluorkohlenwasserstoff aus Styropor von Kühlschränken und dgl. Ebenso können infektiöse Abfallstoffe aus hygienischen Gründen ebenfalls nicht ohne weiteres zerkleinert werden.

Bekannt sind bereits Autoklaven (siehe z.B. EP-PS 0 007 620) zur Entgasung von Produkten.

Eine Behandlung von Abfallstoffen in einem Autoklaven wurde jedoch bisher als unwirtschaftlich angesehen und zwar insbesondere wegen des notwendigen Chargenbetriebes des Autoklaven und einem damit verbundenen stoßartigen und damit unregelmäßigen Anfall von Abgasen.

Ein weiterer Nachteil des bekannten Verfahrens besteht darin, daß in dem Autoklaven Temperaturen von etwa 450° vorgesehen sind, wobei das dabei entstehende Gas einem nachgeschalteten Brenner eines Wärmeerzeugers zugeführt wird. Bei derart hohen Entgasungstemperaturen werden jedoch umweltschädliche und giftige Stoffe gebildet und durch die anschließende Schwelgasverbrennung freigesetzt, so daß z.B. hochhalogenierte Festkörper und anderer Sondermüll mit einem derartigen Verfahren nicht bearbeitet werden können.

Der vorliegenden Erfindung liegt die Aufgabe zugrunde ein Verfahren und eine Anlage zur Entsorgung von Abfallstoffen zu schaffen, durch das auch toxische und/oder infektiöse Abfallstoffe ohne Probleme für die Umwelt und/oder die Gesundheit von Mensch und Tier beseitigt und ggf. recyclierbar gemacht werden können.

Erfindungsgemäß wird diese Aufgabe durch die im kennzeichnenden Teil von Anspruch 1 genannten Merkmale gelöst.

Versuche haben nämlich überraschenderweise gezeigt, daß sich durch eine Verkoppelung eines Autoklaven als erste Entgasungsstufe zur Durchführung einer Teilentgasung mit einer anschließ Reststoff-Pyrolyse die eingangs erwähnten Probleme auf hygienische, wirtschaftliche und ökologische Weise lösen lassen.

Bei einer temperaturgesteuerten Autoklavteilentgasung zur Hygienisierung des Eintragmaterials lassen sich bei ca. 310 Grad C gleichzeitig von Kunststoffen die Halogene abspalten, wofür Verweilzeiten je nach Art von 20 Min. bis 6 Std. erforderlich sind.

Das öl- und teerkohleartige Zwischenprodukt der Autoklavteilentgasung bei unter 320 Grad C enthält noch keine Aromaten und hat damit keine mutagenen oder cancerogenen Eigenschaften. Es kann somit problemlos weiterbehandelt werden, wobei sich bezüglich seiner Weiterverarbeitung als besonderer Vorteil herausstellte, daß der aktivkohleartige Pyrolysereststoff aus der Pyrolyse, wenn er vorher in den Autoklaven eingebracht wird, die flüssigen Komponenten bindet und somit einen festen Autoklavaustrag ermöglicht.

Verbliebene Festkörperstrukturen des Zwischenproduktes können nach ihrer Abkühlung und ihrem Austrag aus dem Autoklaven problemlos granuliert werden, um anschliessend zusammen mit dem öl- und teerstoffangereicherten Pyrolysereststoff in einer Entgasungsanlage, z.B. einer Drehtrommelentgasunganlage, bei ca. 600 Grad C voll in einer zweiten Entgasungsstufe entgast zu werden.

Dabei hat sich als vorteilhaft gezeigt, dem Eintragsmaterial in die Entgasungstrommel anderweitige Abfallstoffe mit so hohen Kohlenstoffgehalt beizumischen, daß das Entgasungsprodukt Pyrolysereststoff mehr als 30 Gew.% Kohlenstoff enthält. In diesem Falle nämlich hat sich überraschend gezeigt, daß der heiße Pyrolysereststoff, wenn er vor einem Kontakt mit Luft durch ein Wasserbad gedrückt wird, eine Aktivkohlestruktur mit so großer Porenoberfläche bildet, daß seine Ab- und Adsorptionseigenschaften ca. 70% jener von normal hergestellter Aktivkohle entsprechen. Dieser Pyrolysereststoff kann aufgrund dieser Eigenschaft anschließend unter anderem zur Filterung von schadstoffhaltigen Abwässern, insbesondere zur Einbindung des bei der Wäsche des Pyrolyse-Spaltgases (vor der Oxidation) - oder der Naßreinigung von SchwelgasRauchgasen anfallenden Abwassers verwendet werden. Soweit keine Vollabsorbtion des Abwassers als Medium des Wasserbades zur Bildung der Aktivkohlestruktur durch Aufdampfung erfolgt, hat das Überschußwasser nahezu Trinkwasserqualität.

Von Vorteil ist auch, daß das erfindungsgemäße Verfahren praktisch abwasserlos ist, d.h. es fällt kein Abwasser an. Das im Verfahren benötigte Wasser kann im Kreislauf geführt werden.

Das im Autoklav intermittierend anfallende Schwelgas kann zu seiner Weiterverarbeitung direkt dem Schwelgas aus der kontinuierlich arbeitenden Pyrolyseentgasung beigemischt werden. Das intermittierend anfallende Schwelgas aus dem Autoklaven, was nach dem Stand der Technik zu entsprechenden Problemen geführt hatte, insbesondere bezüglich einer wirtschaftlichen Aufbereitung, kann nunmehr durch seine Einführung in die zweite Entgasungsstufe problemlos weiterverarbeitet werden. In diesem Falle ist es nämlich lediglich erforderlich die zweite Entgasungsstufe, die ja kontinuierlich arbeitet, bezüglich ihrer Maximalbelastung so auszulegen, daß sie den intermittierenden Betrieb, d.h. die chargenweise Zugabe der granulierten Abfallstoffe verkraften kann.

Wenn man dabei in einer vorteilhaften Weiterbildung der Erfindung mehrere Autoklaven vorsieht und diese zeitlich versetzt entsprechend betreibt so werden Belastungsspitzen weiter aufgebaut bzw. kann man ggf. sogar eine nachfolgende zweite Entgasungsstufe durch eine Pyrolyseentgasung kontinuierlich ausschließlich über Autoklaven betreiben. Dies bedeutet, daß man in einem derartigen Falle nicht unbedingt normalen Haushalts- oder Industriemüll beimischen muß, sondern den Sondermüll auf wirtschaftliche Weise auch alleine entsorgen kann.

Dabei kann es von Vorteil sein, das Schwelgas vor der Zumischung zu dem Schwelgas aus der 2. Entgasungsstufe über eine Abkühlstrecke durch Auskondensation von Salzsäure zu befreien, um die spätere Waschstufe zu entlasten.

In diesem Fall wird man das Schwelgas dann auf über 300 Grad C, vorzugsweise ca. 450 Grad C wieder erwärmen, um durch die Beimischung zum Schwelgas der zweiten Entgasungsstufe dessen Abkühlung und damit verstopfungsverursachende Auskondensierungen von Teerstoffen im Leitungssystem zu vermeiden.

Zur Verbesserung der Wirkungsweise und der Wirtschaftlichkeit des Autoklaven sowie zur Reduzierung der Abgasmenge des Gesamtverfahrens hat sich als Vorteil erwiesen, daß als Heizmedium die heißen Abgase der Schweltrommel aus deren indirekten Beheizung durch Verbrennung von selbsterzeugtem Pyrolyse-Spaltgas oder anderer Brennstoffe eingesetzt werden. Zur Schnellaufheizung kann mittels eines separaten Leitungssystems ein Teil des noch heißeren ( ca. 920 Grad C) Spaltgases hinter dem Gaswandler vor dem Wäscher entnommen und nach der Durchleitung durch den Autoklav zum Wäscher zurückgeführt werden.

Zur Temperatursteuerung sowie zur Abkühlung des Beschickungsraumes im Zusammenhang mit der notwendigen chargenweisen Beschickung des Autoklaven bedarf es eines Kühlmediums, das sauerstofffrei sein muß. Hiefür ist der Einsatz von kaltem Pyrolysespaltgas von Vorteil, das mit ca. 35 Grad C hinter dem Gaswäscher entnommen und anschließend schwelgasangereichert dem Gaswandler zu seiner Entsorgung und Wiederverwendung zurückgeführt oder dem Brennraum der Schweltrommel zur Direktverbrennung zugeführt werden kann.

Nach Abkühlung des Beschickungsraumes auf eine Innenraumtemperatur unterhalb des Niedrigstzündpunktes und des Entgasungsabbruchs (ca. 45 Grad C) kann dann zur Herstellung der Begehbarkeit der Beschickungsraum des Autoklaven mit Kaltluft geflutet werden, die zu ihrer Entsorgung als Verbrennungsluft für den Gaswandler bzw. sonstige Brenner des Entsorgungssystems abgesaugt wird. Dabei werden Begehungstemperaturen ermöglicht, ohne die Autoklav-Manteltemperatur von ca. 310 Grad C senken zu müssen, wenn man in einer Ausgestaltung der Erfindung einen doppelwandigen Autoklaven verwendet, wobei zwischen der Wand des Beschickungsraumes und der Außpenwand des Autoklaven ein Durchströmkanal gegeben ist, durch den die heißen Gase strömen. Auf diese Weise können die Beschickungsintervalle, somit die Durchsatzleistung und damit die Wirtschaftlichkeit des Autoklaven erheblich verbessert werden.

Zur weiteren Senkung der beim Entsorgungs- und Energieumwandlungsprozeß anfallenden klimarelevanten Spurengase wie CO2.CO,NOx sowie zur Erhöhung des Heizwertes des Pyrolysespaltgases durch Reduzierung dessen Stickstoffanteils, soweit dieser als Luftstickstoff aus der Zuführung von Verbrennungsluft in den Gaswandler zu dessen Temperatursteuerung durch unterstöchiometrische Schwelgasverbrennung stammt, hat es sich als möglich und von Vorteil erwiesen, mittels einer Druckwechseladsorptionsanlage aus der atmosphärischen Luft Sauerstoff mit einer Reinheit von mehr als 80% abzuspalten und den Rauchgasteilströmen der Schweltrommel derart beizumischen, daß das Mischprodukt einen Sauerstoffanteil von mehr als 25 Vol% ausweist, und dieses Gemisch zur Deckung des Sauerstoffbedarfs des Gaswandlers sowie der Brennkammern und der eingesetzten Gasmotore zum Antrieb von Generatoren zur Stromerzeugung zurückzuleiten.

Im Falle der Gaswandlerbeschickung kann eine Sauerstoffanreicherung bis zu 45% von Vorteil sein, weil sich dadurch die Spaltgasmasse nennenswert verringern und der Heizwert des Spaltgases um über 10% erhöhen läßt.

Zur entsorgenden Aufbereitung des Pyrolyse-Reststoffes aus der zweiten Entgasungsstufe zu einem vollständig inerten Endprodukt, welches dann zu normalen Deponien gebracht werden kann oder als Baustoffzuschlagstoff verwendbar ist, hat es sich von Vorteil erwiesen, dem nassen Pyrolyse-Reststoff eine bestimmte Menge Puzzolane, d.h. silikatische und aluminatische Materialien, zusammen mit kalziumhaltigen Verbindungen wie Kalk, Kalkhydrat oder Kalkhydratabfall beizumischen, wobei sicherzustellen ist, daß das MOL-Verhältnis von SIO2, Al2O3, CaO, ZnO, Fe2O3 und/oder MgO einerseits zum gesamten MOL-Anteil der Metalle Blei, Chrom, Mangan, Kadmium, Berylium, Barium, Selen, Arsen, Vanadium, Antimon, Wismut, Stronzium und/ Zirkon, mindestens 6:1 beträgt, desgleichen, daß das MOL-Verhältnis von Kalzium, Magnesium und Natrium einerseits, zum gesamten Schwefel, Chlor und Fluor mindestens 2:1 beträgt.

Wird diese Mischung zwischen 200 und 550 kg/cm² zu eierbrikettartigen Pellets verpresst und bei normaler Temperatur über einen Zeitraum von mindestens 4 Tagen ausgehärtet, entstehen Verbindungen wie Kalzium-Silikat-Hydrat, Kalzium-Aluminat-Hydrat und Kalzium-Fer-rit-Hydrat, welche gering wasserlöslich sind und solche hydraulischen Eigenschaften aufweisen, daß das Gebilde formstabil wird und problemlos zur Durchführung eines Ausglühprozesses, z.B. in einen Gleichstrom-Schachtofen eingetragen werden kann, um darin bei ca. 1200-1250 Grad C unter Nutzung des Kohlenstoffenergiegehalts ausgeglüht zu werden. Dabei erfolgt ein Einbau der Schwermetalle in die mineralogische Struktur von komplexen Kalksilikaten, weshalb der Abgasstrom näherungsweise schwermetallfrei, der sandähnliche feste Rückstand entsprechend seiner keramischen Struktur nahezu unauslaugbar ist und damit als Baustoff Verwendung finden kann.

Ist sichergestellt, daß der Kohlenstoffanteil im Pyrolyse-Reststoff über 30 Gew.% beträgt, reicht sein Heizwert aus, um unter Berücksichtigung der notwendigen vorgeschilderten Beimischmengen bei Zufuhr ausreichender Verbrennungsluft im Gleichstrom-Schachtofen Temperaturen bis 1300 Grad C sicherzustellen, um den Glührückstand relativ unlöslich zu machen. Alle vollständig ausgebrannten Brikettrückstände der vorbeschriebenen Art zeigten in Auslaugtests Werte für Kadmium unterhalb 0,2 ppm, für Chrom unterhalb 0,4 ppm und für Blei unterhalb 0,3 ppm, selbst wenn der max. Metallgehalt im Brikett für Kadmium über 8000 ppm und Blei über 6000 ppm lag. Im Abgasstrom konnten keine meßbaren Blei- oder Kadmiumverluste festgestellt werden, so daß die heißen Abgase ohne Reinigung ebenfalls zur Autoklav- und Schweltrommelbeheizung sowie Trocknung feuchter Abfallstoffe vor deren Einbringung in die Entgasungsanlagen verwendet werden können.

Durch die Erfindung wird die Möglichkeit geschaffen, industrielle Rückstände, Bauteile oder dergleichen bzw. Abfallstoffe großer Inhomogenität, gegebenenfalls mit Hohlraum-, Haft- und Kristallwasser etc., die toxisch sind oder bei einer thermischen Umsetzung toxisch werden, ohne Schwierigkeiten der gewünschten pyrolytischen Behandlung zu unterwerfen und dabei Nutzgase für eine Energienutzung zu erzeugen, ohne daß Sonderabfälle und Abwasser entstehen. Anorganische Materialien von Verbundwerkstoffen lassen sich dabei unter Umständen wiedergewinnen, wodurch ein echtes Recycling von wertvollen Grundmaterialien u.a. dadurch möglich wird, daß etwa metallische Bauteile nach der pyrolytischen Entschichtung erneut einer geeigneten Beschichtung unterzogen und als fertige Bauteile nutzbar werden.

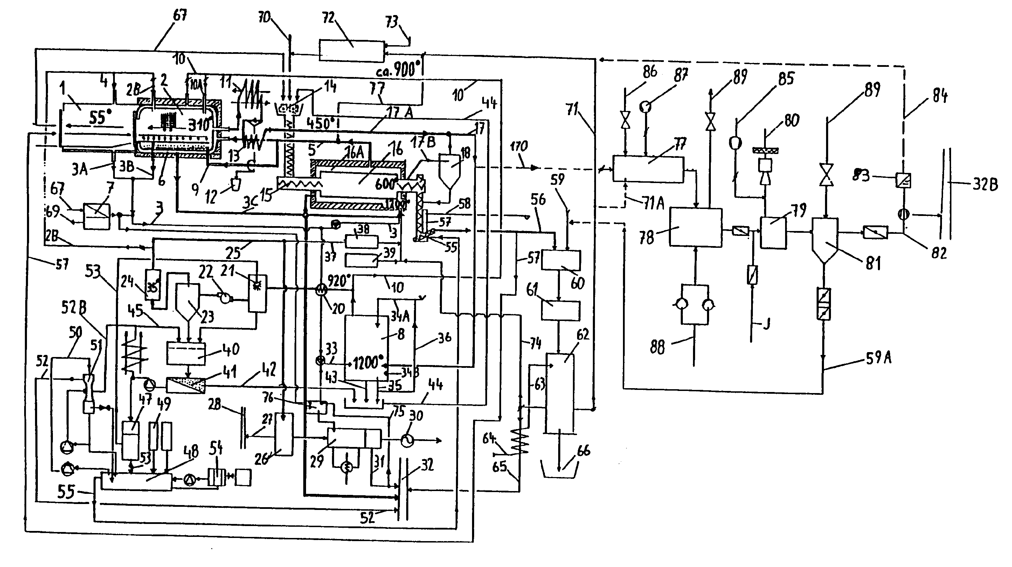

Weitere Vorteile und erfindungsgemäße Weiterbildungen ergeben sich aus weiteren Unteransprüchen und einer erfindungsgemäßen Anlage zur Durchführung des Verfahrens, die nachfolgend anhand der Zeichnung prinzipmäßig beschrieben ist.

Das zu entsorgende oder zu recycelnde Material wird z.B. über eine entsprechende Beschickungseinrichtung in Form einer handverfahrbaren Schiebebühne mit entsprechend gleisgebundenen Spezialwagen von einer Autoklav-Vorkammer 1 in einen Autoklaven 2 eingebracht. Die Verfrachtung kann z.B. in Metall-Gitterboxen erfolgen, unter welchen eine Metallwanne angebracht ist, die zuvor mit aktivkohleartigem Pyrolyse-Reststoff der Entgasungsstufe zwei befüllt wurde, um die schwereren Entgasungsprodukte Öle und Teere zu binden. Die mit Paletten oder vorbeschriebenen Körben beladenen Metallwagen werden aus der Vorkammer 1 in den Reaktionsraum des Autoklaven 2 eingeschoben. Es ist möglich, eine Temperaturbegrenzung zwischen 250 Grad C und 320 Grad C stufenlos vorzuwählen und vorzunehmen. Die Chargenzeiten richten sich nach den organischen Anteilen in Verbindung mit der Größe der Wärmeübertragung. Bei einer Beladung pro Autoklav und pro Charge mit Paletten bzw. Drahtkörben ergeben sich unterschiedliche Chargenzeiten je nach Einbringung der organischen Substanzen. Da eine Mischbeladung möglich ist, lassen sich mittlere Chargenzeiten konstant halten. Über eine Zuleitung 4 kann der Vorkammer 1 Luft zur Reinigung und Kühlung zugleitet werden, die über eine Ableitung 3A entsorgt wird. Über eine Zuleitung 5 werden einem Durchströmkanal 6 des Autoklaven 2 zu dessen Mantelbeheizung heiße Rauchgase einer Schweltrommelbrennkammer 16A zugeführt, um dessen Wände aufzuheizen. Nach der Wärmeabgabe an den Autoklavinnenraum werden die etwas abgekühlten Rauchgase über eine Ableitung 3C zur Wiederaufheizung in der Schweltrommel oder, mit Sauerstoff eines Druckwechselabsorbers 7 angereichert, als Verbrennungsluft für einen Gaswandler 8 oder die Brenner einer Schweltrommel 16 weiterverwendet.

Zur Schnellaufheizung des Spaltraums kann über eine Leitung 10 heißeres Spaltgas des Gaswandlers 8, welches den Gaswandler mit ca. 920 Grad C verläßt, beigemischt worden.

Nach der Beschickung des Autoklaven 2 mit dem zu entgasenden Material wird zuerst über eine Leitung 9 die Entgasungskammer mit Inertgas (heißes Rauchgas) beflutet und über eine Ableitung 3B abgesaugt, um aus dem Reaktionsraum des Autoklaven 2 den Sauerstoff zu entfernen. Anschließend wird über eine Leitung 10A der Reaktionsraum des Autoklaven 2 mit heißem Spaltgas beflutet, um den Beginn der Entgasung des Eintragsmaterials zu beschleunigen. Die Leitung 10A kann eine Zweigleitung der Leitung 10 mit den heißen Spaltgasen des Gaswandlers 8 sein. Die Ableitung dieses heißen Spaltgases erfolgt über die Leitung 3B. Die Entsorgung aus den Leitungen 3A und 3B erfolgt über die Leitungen 3 und 33 durch Zufuhr in den Gaswandler 8 oder den Brenner einer Schweltrommel 16. Nach Beginn der Entgasung wird die Ableitung 3B geschlossen. Das Schwelgas wird über einen Wärmetauscher 11 einer Schwelgasableitung 17 hinter der Schweltrommel 16 zugeführt. Im Wärmetauscher 11 werden bedarfsweise auskondensierbare Inhaltsstoffe wie wässerige Salzsäure aus dem Schwelgasstrom ausgeschieden und in einem Behälter 12 aufgefangen. Danach wird das Schwelgas über einen Wärmetauscher 13 wieder auf mindestens 450 Grad C aufgeheizt, um anschließend über eine Leitung 17A der Leitung 17 beigemischt zu werden. Das Schwelgas wird dann über die Leitung 17 dem Hochtemperatur-Gaswandler 8 zugeführt. Nach Beendigung des Entgasungsprozesses unter 320 Grad C im Reaktionsraum des Autoklaven 2, um die Bildung von Aromaten zu verhindern, wird zum Austrag des Beschickungsmaterials der Autoklav 2 über eine Leitung 2B mit kaltem Spaltgas, das hinter einem Gaswäscher 21 und 24 entnommen ist, geflutet. Die Ableitung erfolgt wieder über die Leitung 3B. Die Beflutung erfolgt so lange bis trotz des ca. 300 Grad C warmen Autoklavmantels im Innenraum die Temperaturen auf unter 80 Grad C gesunken sind. Danach erfolgt eine Beflutung des Autoklaven 2 mit Frischluft, bevor die Autoklavtüre entriegelt und der Wagen mit dem entgasten Material entnommen wird. Über die Gleisweiche kann während der Entnahme gleichzeitig eine Neubeschickung erfolgen.

Das entgaste feste Material einschließlich des mit Ölen und Teeren angereicherten Pyrolyse-Reststoffs in der ausgetragenen Wanne des Wagens wird dann über einen Weg 67 in einen Shredder bzw. eine Granuliereinrichtung 14 eingegeben und dort im Bedarfsfalle mit anderen kohlenstoffhaltigen Abfallstoffen aus der Zufuhrleitung 70 vermischt. Zuvor können im Bedarfsfalle Metalle, die kunststoffummantelt waren, oder vormalige Metallkunststoffverbundstoffe ausgesondert werden, um sie einem Recycling zurückzuführen.

Das im Reaktionsraum des Autoklaven 2 nur teilentgaste, jetzt aber hygienisierte und zerkleinerte Material kann vermischt mit anderen granulierten Abfallstoffen aus der Zufuhrleitung 70 nunmehr über eine Zellenradschleuse oder sonstige Eintragseinrichtungen, wie eine Stopfschnecke 15 in die Schweltrommel 16 eingetragen werden, in der bei Temperaturen von 550 - 600 Grad C in bekannter Weise Schwelgas nach dem Pyrolyseverfahren erzeugt wird, das über eine Abzugsleitung 17B und eine Staubabscheideeinrichtung 18 in die zum Hochtemperaturgaswandler 8 führende Leitung 17 eingeführt wird. In dem Gaswandler 8 erfolgt die Aufarbeitung bzw. Umwandlung des Schwelgases über einem Kohlebzw. Koksbett.

Ein Gaswandler dieser Art ist z.B. in der DE-OS 33 17 977 beschrieben, weshalb hier nicht näher darauf eingegangen wird. Die Auslegung der Schweltrommel 16, des Gaswandlers 8 und der anschließenden Gasreingungseinrichtungen ist so erfolgt, daß diese kontinuierlich durch die Entgasung des über die Zufuhrleitung 70 eingetragenen Abfallstoffstromes arbeiten kann und der intermittierend anfallende Schwelgasstrom und das feste Abfallmaterial aus der chargenweisen Entgasung durch den Autoklaven 2 als Spitzenauslastung dient, wobei auch mehrere Autoklaven 2 phasenverschoben im Parallelbetrieb eingesetzt werden können, um eine gleichmäßigere Beschickung der Anlagenmodule zu gewährleisten. Nach Durchgang durch einen Wärmetauscher 20 gelangt das Spaltgas aus dem Gaswandler 8 in eine Gaswaschanlage, die im wesentlichen aus einem Wassersprühturm 21, einem Gebläse 22 und einem Reinigungszyklon 23 und einem Tropfenabscheider 24 besteht. Über eine Gasleitung 25 gelangt das gereinigte Gas zu einem Gasometer 26, in dem bei einer Anlieferung von zuviel Gas über eine Nebenleitung 27 überschüssiges Gas einer Abfackeleinrichtung 28 zugeführt werden kann. Normalerweise gelangt das Gas von dem Gasometer 26 zu einem Gasmotor 29, der mit einem Generator 30 verbunden ist, wobei über eine Abgasleitung 31 die verbrannten Abgase in einen Kamin 32 eingeleitet werden. Diese Abgase oder ein Teilabgasstrom 75 kann jedoch auch einer Mischkammer 76 zugeführt werden, welcher durch den Druckwechselabsorber 7 sauerstoffangereicherte Luft beigemischt worden ist, die wiederum als Verbrennungsluft für den Gasmotor 29 und über eine Leitung 33 dem Gaswandler zur Aufrechterhaltung seiner Crack-Temperatur durch unterstöchiometrische Schwelgasverbrennung rückgeführt werden kann. Der Gaswandler 8 erhält über einen Kokseintrag 34A Koks und über eine Leitung 34B Wasser. Asche und Schlacke wird über eine Austragsleitung 35 ausgetragen. Gegebenenfalls kann zur Energieeinsparung auch noch eine Koksrückleitung 36 für den von der Schlacke befreiten Koks vorgesehen sein. Der Koks wird zusammen mit den festen Rückständen aus dem Waschwasserabsetzbecken einer Gasreinigung 41 in die Schweltrommel 16 zurückgeführt. Von der Gasleitung 25 aus zweigt eine Nebenleitung 37 ab, welche zu einem Gasbrenner 38 führt, der zur Wärmezufuhr für die Schweltrommel 16 dient. Während der Anfahrphase der Anlage dient ein Ölbrenner 39 oder auch ein separater Gasbrenner zum Anheizen der Schweltrommel 16. Nachfolgend im laufenden Betrieb hingegen, kann der für die Schweltrommel 16 erforderliche Wärmebedarf vollständig über den Brenner 38 gedeckt werden.

Das bei der Gasreinigung anfallende Waschwasser gelangt in einen Waschwassertank 40 und anschließend in eine Filtereinrichtung 41, was im allgemeinen ein Absetzbecken ist. Abgetrennte Feststoffe in der Filtereinrichtung werden über eine Leitung 42 in einen Aschebehälter 43 eingebracht. Über eine Austragsleitung 44 werden die Reststoffe aus dem Aschebehälter 43 abgeführt und über eine Einschubeinrichtung, z.B. die Stopfschnecke, 15 wieder in die Schweltrommel 16 eingebracht.

Das gereinigte Waschwasser gelangt aus der Filtereinrichtung 41 über eine Rückleitung 45 nach Durchgang durch einen Kühlturm 46 wieder in den Sprühturm 21 der Gaswaschanlage zurück. Ein Teil des gereingten Waschwassers wird in eine Waschwasserneutralisationsanlage 47/48 eingeleitet. Von der Waschwasserneutralisationsanlage 47/48 aus gelangt das Waschwasser über eine Rückleitung 53 zur Kreislaufbehandlung in den Sprühturm 21, während eine Teilmenge über eine Teilmengenentnahmeleitung in der Chargenbehandlungsanlage der Wasserneutralisationsanlage 47/48 gelangt. Darin erfolgt in bekannter Weise eine chemische Reinigung durch entsprechende Chemikalien, die über Chemikalienleitung 49 eingegeben werden, sofern die Chemikalienoxidation nicht durch Ozonisierungseinrichtung 54 erfolgt, wodurch die rückstandserhöhende Additivzugabe stark verringert werden kann. Über eine Kreislaufleitung 50 wird das Waschwasser zum Teil durch einen Luftfilter 51 zur Entfernung von Schäumungen geführt, wobei Abgase durch eine Leitung 52 über den Kamin 32 abgeblasen werden, zum Teil erfolgt eine Rückleitung über eine Leitung 52B in den Sprühturm 21. Das im Behälter 48 anfallende Überschußwasser der Gasreinigung wird über eine Leitung 55 einem Wasserbad 57 für den Pyrolyse-Reststoffaustrag hinter der Schweltrommel 16 zugeführt. Während des dort stattfindenden Aufdampfprozesses wird diese Waschwasserüberschußmenge vom Pyrolyse-Reststoff als Hohlraum- und Haftwasser gebunden, wobei die in ihm enthaltenen Schadstoffe von der Aktivkohle ad- und absorbiert werden. Auf diese Weise ist das Waschwasser entsorgt.

Sollte aus der Gaswäsche mehr Überschußwasser anfallen, als vom Pyrolyse-Reststoff gebunden wird, erfolgt die Ableitung über eine Leitung 58. Aufgrund der Filterwirkung des aktivkohleartigen Pyrolyse-Reststoffes hat dieses Überschußwasser jedoch nahezu Trinkwasserqualität, Im Regelfall fällt jedoch kein Überschußwasser an. Der nasse Pyroylse-Reststoff kann über eine Leitung 56 einer Mischeinrichtung 60 zugeleitet werden, in welcher eine Vermischung mit silikatischen und aluminatischen Materialien, sowie mit kalziumhaltigen Verbindungen erfolgt. Anschließend erfolgt die Eintragung in eine Brikettierpresse 61, in welcher aus dem Mischprodukt eierbrikettähnliche Presslinge hergestellt werden, die formstabil sind. Diese werden anschließend in einem Gleichstrom-Schachtofen 62 bei ca. 1250 Grad C ausgeglüht.

Die dabei entstehenden, über 1000 Grad C heißen Abgase können über die Leitung 74 als Teilstromleitung zur Schweltrommelbeheizung oder als Teilstromleitung 71 zur Trocknung anderer Abfallstoffe einem Trockner 72 zugeführt werden. Der hierfür nicht benötigte Teilstrom wird über die Leitung 65 dem Schornstein 32 zugeleitet. Die für den Gleichstrom-Schachtofen 22 benötigte Frischluft wird über einen Wärmetauscher 64 über die Leitung 63 zugeführt.

Der Glührückstand aus dem Schachtofen 62 ist voll inertisiert und kann über eine Austragsvorrichtung 66 einer Weiterverwertung als Baustoffzuschlagstoff zugeleitet werden.

Alternativ zu der vorbeschriebenen Schwelgas-Crackung über einen Gaswandler 19 mit anschließender Spaltgaswäsche, in welchem Fall die Reinigung des Gases vor der Oxidation bei ca. 40 Grad C erfolgt und somit nur ein sehr geringes Gasvolumen gereinigt werden muß, kann das Schwelgas aus der Leitung 17 auch direkt über die nur gestrichelt dargestellte Verbindungsleitung 170 einer Brennkammer 77 zugeführt werden, welcher eine Kesselanlage 78, eine Mischkammer 79, welcher Kalk über eine Düseneinrichtung 80 durch eine Luftleitung 85 zugedüst wird und eine Filteranlage 81 nachgeschaltet sind. Die Rückstände der Filtereinrichtung können über eine Leitung 59A in der Mischkammer 60 entsorgt werden. Das in der Filteranlage 81 gereinigte bzw. gefilterte Abgas wird über eine Abgasleitung 82 dem Schornstein 32B oder - gegebenenfalls - nach Durchgang durch eine Auskondensationsanlage 83 über eine Leitung 84 zu Aufwärm-, Trocknungs oder Heizzwecken in die Anlage, z.B. zur Teilstromleitung 71, zurückgeleitet.

In die Brennkammer führt in üblicher Weise eine Luftleitung 86 und gegebenenfalls auch noch eine Sekundärbrennstoffleitung 87. In die Kesselanlage 78 mündet eine Speisewasserzuleitung 88 und eine Dampfleitung 89 führt heraus. In die Filteranlage 81 wird zur Reinigung Preßluft über eine Preßluftleitung 89 eingeblasen.

Während der Autoklav 2 und die Schweltrommel 16 im Verbund betrieben werden müssen, kann die Anlageneinheit 60-62 auch anderweitig betrieben werden, wenn dort ein entsprechender Energieverbraucher existiert.

## Patentansprüche

1. Verfahren zur Entsorgung von toxischen und/oder infektiösen Abfallstoffen, insbesondere von hochhalogenierten Abfallfestkörpern, Kunststoffbehältnissen, Krankenhausabfällen und dgl., und zur Rückgewinnung von Wertstoffen und zur Inertisierung von nicht recyclier- und nicht entgasbaren Reststoffen, durch eine Entgasung nach dem Pyrolyseverfahren unter Luftabschluß und reduziertem Sauerstoffgehalt, mit nachfolgender Direktverbrennung der bei der Pyrolyse gewonnenen Schwelgase oder Crackung des Schwelgases zu einem Pyrolysespaltgas, und mit einer Mineralisierung der Entgasungsrückstände,
**dadurch gekennzeichnet,** daß
a) die zu entsorgenden Abfallstoffe in einen Autoklaven (2) eingegeben werden, dort bei einer Verweilzeit von 20 Min. bis 6 Std. bei ca. 250-320 Grad C in einer ersten Entgasungsstufe teilentgast werden, anschließend abgekühlt und zu Granulat oder Pellets in der Größe von 1 bis 50 mm aufbearbeitet werden, welche anschließend mit dem Pyrolyse-Entgasungsverfahren in einer zweiten Entgasungsstufe bei einer Entgasungstemperatur von 550-600 Grad C behandelt werden, wobei Schwelgas erzeugt und von den Reststoffen, wie Kohlenstoff, Asche, Schwermetallteile und anderen Bestandteilen, abgetrennt wird;
b) die im Autoklaven (2) anfallenden flüssigen Teilentgasungszwischenprodukte, wie Öl und/oder Teerkohle, in die zweite Entgasungsstufe eingeleitet werden, und
c) das bei der ersten Entgasungsstufe im Autoklaven (2) abgetrennte Schwelgas abgesaugt und dem Schwelgasstrom aus der zweiten Entgasungsstufe beigemischt wird.

2. Verfahren nach Anspruch 1,
**dadurch gekennzeichnet,** daß
zusätzlich in die Pyrolyseentgasung als zweite Entgasungsstufe Granulat oder Pellets in der Größe von 1-50 mm aus Haushalts- und/oder Industriemüll eingegeben wird.

3. Verfahren nach Anspruch 1 oder 2,
**dadurch gekennzeichnet,** daß
das im Autoklaven (2) erzeugte Schwelgas gekühlt und von auskondensierter Salzsäure befreit wird, wonach es vor einer Zumischung zu dem Schwelgasstrom der zweiten Entgasungsstufe aufgewärmt wird.

4. Verfahren nach einem der Ansprüche 1 - 3,
**dadurch gekennzeichnet,** daß
die Beheizung des Autoklaven (2) nach jeder Neubeschickung mit heißen Abgasen aus der Heizeinrichtung für die Temperaturerzeugung für die zweite Entgasungsstufe oder mittels wenigstens einem Teil von der Gascrackung erhaltenen heißen Spaltgase erfolgt.

5. Verfahren nach einem der Ansprüche 1 - 4,
**dadurch gekennzeichnet,** daß
die Abkühlung des Autoklaven (2) durch eine Spülung mit den bei der Gascrackung gewonnenen nach einer Gaswäsche abgekühlten Spaltgas erfolgt und daß nach einer Abkühlung auf Temperaturen von unter 80 Grad C die Nachspülung und Abkühlung auf unter 45 Grad C mit Frischluft durchgeführt wird.

6. Verfahren nach Anspruch 5,
**dadurch gekennzeichnet,** daß
die Abkühlgase aus dem Autoklaven (2) zu ihrer Entsorgung als Ansaugluft für die Brennereinrichtungen zur Erwärmung der zweiten Entgasungsstufe durch das Pyrolyseentgasungsverfahren oder den Brenner eines Gaswandlers zur Erzeugung von Spaltgas oder direkt dem Gaswandler zugeführt werden.

7. Verfahren nach einem der Ansprüche 1-6,
**dadurch gekennzeichnet,** daß
die Abwässer der Schwelgas- und/oder Pyrolysespaltgasreinigung in ein Wasserbad (57) für den Pyrolysereststoff aus der zweiten Entgasungsstufe eingegeben werden.

8. Verfahren nach einem der Ansprüche 1 - 7,
**dadurch gekennzeichnet,** daß
der Pyrolysereststoff der zweiten Entgasungsstufe mit kalziumhaltigen Verbindungen wie Kalk, Kalkhydrat, sowie Puzzolanen, wie silikatischen Materialien, vermischt wird, anschließend zu Briketts gepreßt und abschließend bei ca. 1.200 Grad C ausgeglüht wird, wobei die Schwermetalle in die mineralogische Struktur von komplexen Kalksilikaten eingebaut werden.

9. Verfahren nach einem der Ansprüche 1-8,
**dadurch gekennzeichnet,** daß
zur Verminderung der Emissionen an Spurengasen die Abgase aus den Brennkammern der Pyrolyseentgasung und von weiteren Verbrennungsluft benötigten Einrichtungen bei dem Verfahren als Verbrennungsluft diesen Einrichtungen zugeführt werden, wobei diese mittels einer Druckwechselabsorptionsanlage mit aus der Atmosphäre gewonnenen und mit Sauerstoff angereicherter Luft derart vermischt werden, daß der Rückführstrom mindestens 25 Vol% Sauerstoff enthält.

10. Verfahren nach einem der Ansprüche 1-9,
**dadurch gekennzeichnet,** daß
wenigstens ein Teil des festen Pyrolysereststoffes in den Autoklaven (2) zur Bindung der flüssigen Teilentgasungszwischenprodukte eingeleitet wird.

11. Anlage zur Durchführung des Verfahrens nach einem der Ansprüche 1-10, mit einer Müllzerkleinerungs- und Granulierungseinrichtung (14), mit einer Entgasungseinrichtung (16) nach dem Pyrolyseverfahren und mit einem der Entgasungseinrichtung nachgeschalteten Gaswandler (8) zur Gewinnung von Spaltgas oder einer der Entgasungseinrichtung nachgeschalteten Brennkammer (78) zur thermischen Nachverbrennung mit nachgeschalteter Rauchgasreinigung,
**dadurch gekennzeichnet,** daß
vor der Müllzerkleinerungs- und Granulierungseinrichtung (14) ein Autoklav (2), angeordnet ist.

12. Anlage nach Anspruch 11,
**dadurch gekennzeichnet,** daß
mehrere Autoklaven (2) parallel geschaltet sind.

13. Anlage nach Anspruch 11 oder 12,
**dadurch gekennzeichnet,** daß
die Abwässer der Gasreinigung über eine Leitung (55) einem Wasserbad (57) für die Pyrolysereststoffe zugeführt sind, daß die heißen Abgase mittels einer Gasteilmengenleitung zur Beheizung und Innenraumspülung dem Autoklaven (2) zugeführt sind, und daß der Schwelgasstrom aus dem Autoklaven (2) über eine Gasleitung (45) mit einer Kühleinrichtung (46) zur Auskondensierung von restlicher Salzsäure mit der Schwelgasleitung (53) hinter der zweiten Entgasungsstufe (16) verbunden ist.

14. Anlage nach Anspruch 11, 12 oder 13,
**dadurch gekennzeichnet,** daß
der Autoklav (2) doppelwandig ausgebildet ist, wobei ein Durchströmungskanal (6) für heiße Gase gebildet ist.

15. Anlage nach Anspruch 14,
**dadurch gekennzeichnet,** daß
die Gasleitung (45) nach der Auskondensierung von wässriger Salzsäure mit einer Aufwärmeeinrichtung (13) auf Temperatur von über 300 Grad C, vorzugsweise ca. 450 Grad C, versehen ist.

16. Anlage nach einem der Ansprüche 11-15,
**dadurch gekennzeichnet,** daß
zur Sauerstoffanreicherung der für die Verbrennungseinrichtungen (16A) benötigten Luft eine Druckwechselabsorptionsanlage (7) vorgesehen ist.

17. Anlage nach einem der Ansprüche 11-16,
**dadurch gekennzeichnet,** daß
zur Ausglühung der Pyrolysereststoffe ein Glühofen (62), insbesondere ein Gleichstromschachtofen, vorgesehen ist.

18. Anlage nach Anspruch 17,
**dadurch gekennzeichnet,** daß
die Abgasleitung (31) des Schachtofens (62) über Verbindungsleitungen mit dem Autoklaven (2), der Entgasungseinrichtung (16) nach dem Pyrolyseverfahren oder einer Abfalltrocknungsanlage (72) zu dessen Erwärmung oder Beheizung verbunden ist.

## Claims

1. A method of disposing of toxic and/or infectious waste, particularly highly halogenated solid waste, Plastics containers, hospital waste and the like, and of recovering valuable substances and rendering inert residues which are not recyclable and cannot be degassed, by degassing after pyrolysis with the exclusion of air and reduced oxygen content, with the subsequent direct combustion of the low-temperature carbonization gas produced during pyrolysis, or cracking of the low-temperature carbonization gas to a cracked pyrolysis gas, and with mineralization of the degassing residues,
characterized in that:
a) the waste to be disposed of is supplied to an autoclave (2), is partially degassed therein for a period of from 20 min. to 6 hours at about 250-320 degrees C in a first degassing stage, is subsequently cooled and processed to granulates or pellets with sizes of from 1 to 50 mm, which are subsequently treated by the pyrolysis-degassing process in a second degassing stage at a degassing temperature of 550-600 degrees C, low-temperature carbonization gas being produced and separated from the residues such as carbon, ashes, heavy-metal components and other components,
b) the fluid intermediate products of the partial degassing stage such as oil and/or tar coals accumulating in the autoclave (2) are passed to the second degassing stage, and
c) the low-temperature carbonization gas separated in the autoclave during the first degassing stage is drawn off and is added to the low-temperature carbonization gas-flow from the second degassing stage.

2. A method according to Claim 1,
characterized in that
in addition, granulates or pellets with sizes of from 1 to 50 mm from household and/or industrial refuse are supplied to the pyrolysis degassing stage as the second degassing stage.

3. Method according to Claim 1 or Claim 2,
characterized in that
low-temperature carbonization gas produced in the autoclave (2) is cooled and the hydrochloric acid which is condensed out is removed therefrom, after which the low-temperature carbonization gas is heated before being added to the low-temperature carbonization gas-flow of the second degassing stage.

4. A method according to any one of Claims 1 - 3,
characterized in that
after each new loading stage, the autoclave (2) is heated with hot exhaust gases from the heating device for generating the heat for the second degassing stage, or by means of at least some of the hot cracked gases produced by the cracking of the gases.

5. A method according to any one of Claims 1 - 4,
characterized in that
the autoclave (2) is cooled by being flushed with the cracked gas which is obtained during the cracking of the gases and which is cooled after scrubbing, and in that, after cooling to a temperature below 80 degrees C, reflushing and cooling to below 45 degrees C are carried out with fresh air.

6. A method according to Claim 5,
characterized in that
the cooling gases from the autoclave (2) are supplied for their disposal as intake air for the burner devices for heating the second degassing stage by the pyrolysis degassing process, or to the burner of a gas-converter for producing cracked gas, or direct to the gas converter.

7. A method according to any one of Claims 1-6,
characterized in that
the waste water from the cleaning of the low-temperature carbonization gas and/or of the cracked Pyrolysis gas is supplied to a water bath (57) for the pyrolysis residues from the second degassing stage.

8. A method according to any one of Claims 1-7,
characterized in that
the pyrolysis residues from the second degassing stage are mixed with compounds containing calcium such as lime or hydrated lime, as well as pozzolans such as silicate materials, are subsequently compressed into briquettes and, finally, are calcined at about 1,200 degrees C, the heavy metals being integrated into the mineralogical structure of lime silicate complexes.

9. A method according to any one of Claims 1-8,
characterized in that
in order to reduce emissions to trace gases, the exhaust gases from the combustion chambers of the pyrolysis degassing stage and of further devices which need air for combustion are supplied as combustion air to these devices during the process, the exhaust gases being mixed, by means of a pressure-change absorption system, with air obtained from the atmosphere and enriched with oxygen, the mixing taking place in a manner such that the recycled flow contains at least 25% by volume of oxygen.

10. A method according to any one of Claims 1-9,
characterized in that
at least some of the solid pyrolysis residue is supplied to the autoclave (2) for binding the liquid intermediate products of the partial degassing stage.

11. A system for carrying out the method according to any one of Claims 1-10, with a refuse-comminution and -granulating device (14), with a device (16) for degassing after pyrolysis, and with a gas-converter (8) downstream of the degassing device for obtaining cracked gas or a combustion chamber (78) downstream of the degassing device for thermal afterburning with cleaning of the flue-gas downstream,
characterized in that
an autoclave (2) is disposed upstream of the refuse-comminution and -granulating device (14).

12. A system according to Claim 11,
characterized in that
a plurality of autoclaves (2) is connected in parallel.

13. A system according to Claim 11 or Claim 12,
characterized in that
the waste water from the cleaning of the gases is supplied, by means of a pipe (55), to a water bath (57) for the pyrolysis residues, in that the hot waste gases are supplied, by means of a pipe for a partial quantity of the gases, to heat and flush the interior of the autoclave (2), and in that the low-temperature carbonization gas-flow from the autoclave (2) is connected to the low-temperature carbonization gas pipe (53) downstream of the second degassing stage (16), by means of a gas pipe (45) with a cooling device (46) for condensing out residual hydrochloric acid.

14. A system according to Claim 11, Claim 12 or Claim 13,
characterized in that
the autoclave (2) is formed with a double wall in which a channel (6) is formed for the passage of the hot gases.

15. A system according to Claim 14,
characterized in that
the gas pipe (45) has a device (13) for heating to a temperature higher than 300 degrees C, preferably about 450 degrees C, after the aqueous hydrochloric acid has been condensed out.

16. A system according to one of Claims 11-15,
characterized in that
a pressure-change absorption system (7) is provided for enriching with oxygen the air required for the combustion devices (16A).

17. A system according to any one of Claims 11-16,
characterized in that
a calcining furnace (62), particularly a parallel-flow shaft furnace, is provided for calcining the pyrolysis residues.

18. A system according to Claim 17,
characterized in that
the exhaust gas pipe (31) of the shaft furnace (62) is connected, by means of connecting pipes, to the autoclave (2), to the device (16) for degassing after pyrolysis, or to a system (72) for drying waste, for the warming or heating thereof.

## Revendications

1. Procédé pour éliminer des déchets toxiques et/ou infectieux, notamment des déchets solides fortement halogénés, des récipients en matière synthétique, des déchets hospitaliers et analogues, et pour récupérer des substances de valeur et rendre inertes des résidus non susceptibles de recyclage ni de dégazage, au moyen d'un dégazage par le procédé de pyrolyse à l'abri de l'air et sous teneur réduite en oxygène, suivi d'une combustion directe des gaz de distillation produits lors de la pyrolyse ou d'un craquage du gaz de distillation en un gaz de pyrolyse craqué, ainsi que d'une minéralisation des résidus du dégazage, **caractérisé** en ce que :
a) les déchets à éliminer sont mis dans un autoclave (2), sont partiellement dégazés dans celui-ci dans une première étape de dégazage avec une durée de séjour de 20 minutes à 6 heures à environ 250 à 320°C, sont ensuite refroidis et préparés en granulats ou boulettes d'une taille de 1 à 50 mm, lesquels sont ensuite traités par le procédé de dégazage par pyrolyse dans une seconde étape de dégazage à une température de dégazage de 550 à 600°C, où du gaz de distillation est produit et séparé des résidus, notamment du carbone, de la cendre, des composés de métaux lourds et d'autres composants;
b) les produits intermédiaires liquides du dégazage partiel qui apparaissent dans l'autoclave (2), notamment de l'huile et/ou du goudron, sont introduits dans la seconde étape de dégazage, et
c) le gaz de distillation séparé lors de la première étape de dégazage dans l'autoclave (2) est aspiré et mélangé au débit de gaz de distillation provenant de la seconde étape de dégazage.

2. Procédé selon la revendication 1, **caractérisé** en ce que des granulats ou boulettes d'une taille de 1 à 50 mm provenant d'ordures ménagères et/ou de déchets industriels sont ajoutés dans le dégazage par pyrolyse formant la seconde étape de dégazage.

3. Procédé selon la revendication 1 ou 2, **caractérisé** en ce que le gaz de distillation produit dans l'autoclave (2) est refroidi et débarrassé du condensat d'acide chlorhydrique, après quoi il est réchauffé avant d'être ajouté au débit de gaz de distillation de la seconde étape de dégazage.

4. Procédé selon l'une des revendications 1 à 3, **caractérisé** en ce que le chauffage de l'autoclave (2) après chaque recharge est effectué au moyen de gaz d' échappement chauds de 1' unité de chauffage assurant la température de la seconde étape de dégazage ou au moyen d'au moins une partie des gaz craqués chauds produits par le craquage

5. Procédé selon l'une des revendications 1 à 4, **caractérisé** en ce que le refroidissement de l'autoclave (2) est effectué au moyen d'un balayage par les gaz craqués, résultant du craquage et refroidis après un lavage des gaz, et en ce qu'après un refroidissement à des températures inférieures à 80°C, la suite du balayage et du refroidissement au-dessous de 45°C est effectuée avec de l'air frais.

6. Procédé selon la revendication 5, **caractérisé** en ce que les gaz de refroidissement sortant de l'autoclave (2) pour être éliminés sont amenés comme air d'admission pour les dispositifs à brûleurs pour le chauffage de la seconde étape de dégazage par le procédé de dégazage par pyrolyse ou pour le brûleur d'un convertisseur de gaz produisant du gaz craqué ou directement dans le convertisseur de gaz.

7. Procédé selon l'une des revendications 1 à 6, **caractérisé** en ce que les eaux usées issues du lavage des gaz de distillation et/ou des gaz craqués par pyrolyse sont conduites à un bain d'eau (57) destiné aux résidus de pyrolyse de la seconde étape de dégazage.

8. Procédé selon l'une des revendications 1 à 7, **caractérisé** en ce que les résidus de pyrolyse de la seconde étape de dégazage, contenant des composés calciques, notamment de la chaux et de l'hydrate de chaux, ainsi que des pouzzolanes, notamment des matériaux riches en silicates, sont mélangés puis pressés en briquettes et ensuite cuits à environ 1200°C, de sorte que les métaux lourds sont incorporés à la structure minéralogique de silicates calciques complexes.

9. Procédé selon l'une des revendications 1 à 8, **caractérisé** en ce que, pour réduire les émissions de gaz rares, les gaz s'échappant des chambres de combustion du dégazeur par pyrolyse et d'autres dispositifs utilisant de l'air de combustion dans le procédé sont amenés comme air de combustion à ces dispositifs, ces gaz étant mélangés au moyen d'une installation d'absorption à pression alternée à de l'air prélevé dans l'atmosphère et enrichi en oxygène, de telle sorte que le flux recyclé contient au moins 25% en volume d'oxygène.

10. Procédé selon l'une des revendications 1 à 9, **caractérisé** en ce qu'au moins une partie du résidu solide de pyrolyse est introduite dans l'autoclave (2) pour se lier aux produits intermédiaires liquides du dégazage partiel.

11. Installation pour la mise en oeuvre du procédé selon l'une des revendications 1 à 10, comportant une unité de broyage et de granulation des déchets (14), une unité de dégazage (16) par le procédé de pyrolyse et un convertisseur de gaz (8), disposé à la suite de l'unité de dégazage pour produire des gaz craqués, ou une chambre de combustion (78) disposée à la suite de l'unité de dégazage pour effectuer une postcombustion thermique suivie d' une épuration des gaz de fumée, **caractérisée** en ce qu'un autoclave (2) est disposé en amont de l'unité de broyage et de granulation des déchets (14).

12. Installation selon la revendication 11, **caractérisée** en ce que plusieurs autoclaves (2) sont disposés en parallèle.

13. Installation selon la revendication 11 ou 12, **caractérisée** en ce que les eaux usées issues de l'épuration des gaz sont amenées par une conduite (55) à un bain d'eau (57) destiné aux résidus de pyrolyse, en ce que les gaz d'échappement chauds sont amenés par une conduite de dérivation de gaz à l'autoclave (2) pour le chauffer et en balayer l'intérieur, et en ce que le flux de gaz de distillation issu de l'autoclave (2) est raccordé, par une conduite de gaz (45) pourvue d'une unité de refroidissement (46) pour condenser des résidus d'acide chlorhydrique, à la conduite de gaz de distillation (53) en aval de la seconde étape de dégazage (16).

14. Installation selon la revendication 11, 12 ou 13, **caractérisée** en ce que l'autoclave (2) est à double paroi, ce qui forme un canal (6) pour le passage de gaz chauds.

15. Installation selon la revendication 14, **caractérisée** en ce que la conduite de gaz (45), au-delà de la condensation d'acide chlorhydrique aqueux, est pourvue d'une unité de réchauffage (13) à une température supérieure à 300°C, de préférence d'environ 450°C.

16. Installation selon l'une des revendications 11 à 15, **caractérisée** en ce qu'une installation d'absorption à pression alternée (7) est prévue pour enrichir en oxygène l'air nécessaire aux dispositifs de combustion (16A).

17. Installation selon l'une des revendications 11 à 16, **caractérisée** en ce qu'un four à calciner (62), notamment un four à cuve à courant continu, est prévu pour calciner les résidus de pyrolyse.

18. Installation selon la revendication 17, **caractérisée** en ce que la conduite (31) d'évacuation des gaz du four à cuve (62) est raccordée par des conduits de liaison à l'autoclave (2), à l'unité de dégazage (16) par le procédé de pyrolyse ou à une installation de séchage des déchets (72) pour chauffer ou réchauffer ceux-ci.
